# FASCICULE DE BREVET EUROPEEN

(11) **EP 4 629 209 B1**
(45) Date de publication et mention de la délivrance du brevet: **14.10.2026**
(21) Numéro de dépôt: 25163545.4
(22) Date de dépôt: 13.03.2025
(51) Int. Cl.: G07G 5/00, G06F 3/12, G06Q 10/087, G06Q 20/20, G06Q 50/12, G07F 17/42

(54) **SYSTÈME D'ASSISTANCE AU SUIVI DE COMMANDES DE PRODUITS DANS LE DOMAINE DE LA RESTAURATION**
SYSTEM ZUR UNTERSTÜTZUNG DER VERFOLGUNG VON PRODUKTBESTELLUNGEN IM WIEDERHERSTELLUNGSBEREICH
SYSTEM FOR ASSISTING IN TRACKING PRODUCT ORDERS IN CATERING

(30) Priorité: 03.04.2024 FR 2403418
(43) Date de publication de la demande: 08.10.2025
(73) Titulaire: Abprod, 36000 Chateauroux (FR)
(72) Inventeur: Boutin, Arnaud, 36000 Châteauroux (FR)
(74) Mandataire: Lequien, Philippe

(56) Documents cités:
- US-A1- 2015 235 193
- US-A1- 2017 351 465

## Description

Le domaine de l'invention est celui de la conception des équipements et méthodes mis en œuvre dans le processus de production et de suivi des commandes de produits dans le domaine de la restauration, et plus précisément mais non exclusivement, dans le domaine de la restauration rapide.

Dans le domaine de l'invention, il est connu le document de brevet publié sous le numéro US 2017/351465A1 qui décrit une imprimante et un ensemble informatique associé, destinés à être mis en œuvre dans le domaine de la restauration.

Dans le domaine de l'invention, beaucoup de processus de production actuels exploitent une imprimante de tickets ou une imprimante de point de vente.

Une telle imprimante dite « de tickets » ou « de point de vente » se caractérise généralement par sa technologie d'impression matricielle ou thermique, ainsi que sa capacité à commander, via un ou plusieurs ports de sortie commandés, des écrans externes tels que des tiroirs-caisses ou des avertisseurs sonores.

De telle imprimantes se caractérisent par ailleurs par l'usage d'un protocole de contrôle, mettant en œuvre un langage codé spécifique au constructeur de l'imprimante, pour l'échange entre l'imprimante et l'application métier, exécuté par l'unité informatique centrale qui souhaite la commander. La communication de l'application vers l'imprimante peut contenir les éléments suivants issus du protocole de communication, à savoir :
- des commandes d'impression, se traduisant par des symboles à imprimer ;
- des commandes de changement de la machine d'état interne : type de texte, taille du texte, alignement, etc...
- des commandes d'opérations auxiliaires : coupe du papier, commande du tiroir-caisse, etc.

Une fois transmises, les commandes à exécuter sont stockées dans la mémoire de l'imprimante afin de constituer le flux d'impression. Cette mémoire est ensuite vidée et traitée de façon séquentielle par le processeur principal de l'imprimante. Le fonctionnement séquentiel du traitement du flux d'impression est tel que les tickets sont imprimés les uns à la suite des autres, l'impression d'un nouveau ticket n'étant exécutée qu'après que le ticket imprimé en attente soit pris et extrait de l'imprimante par un opérateur.

De telles imprimantes sont régulièrement mises en œuvre en restauration rapide, dans un processus selon lequel un ticket adhésif est associé à chaque produit (le ticket étant apposé sur la boite d'emballage contenant le produit), en vue de faciliter l'assemblage et la livraison finale des produits.

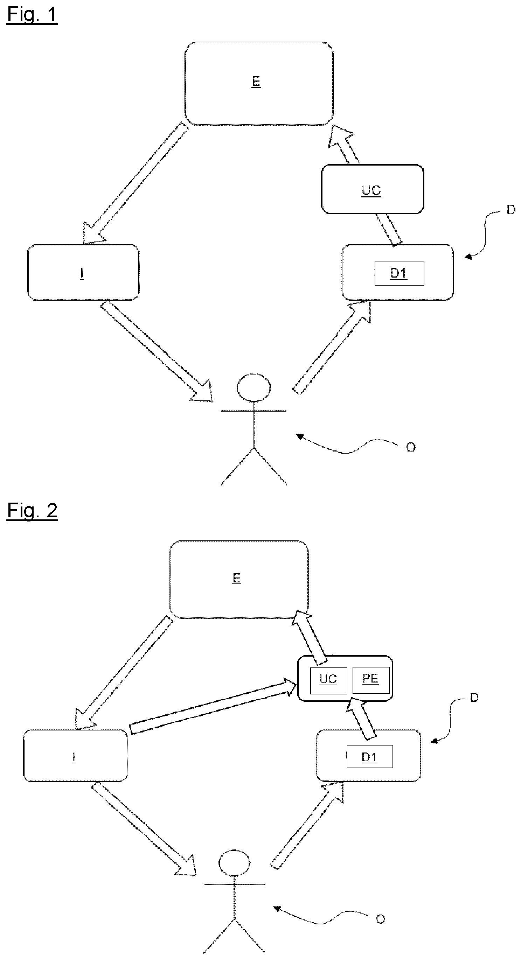

Le processus de production et de suivi des commandes correspondant est schématiquement illustré par la figure 1.

Tel que cela apparait sur cette figure, le processus met en œuvre une unité centrale UC à partir de laquelle les données de commandes produits sont enregistrées. L'unité centrale, exécutant l'application métier, transmet à un écran d'affichage E des données à afficher relatives aux commandes produits. Dans le même temps, les données relatives aux produits de la commande sont transmises à l'imprimante de tickets I, sous forme d'un flux d'impression, pour qu'un ticket soit imprimé pour chaque produit réalisé. Le flux d'impression est mémorisé dans une mémoire de l'imprimante de tickets I et les tickets sont imprimés dans l'ordre strict du flux d'impression. En revanche, un seul ticket est imprimé et mis en attente de préhension par un opérateur O, un nouveau ticket n'étant imprimé que si le ticket en attente est extrait de l'imprimante, comme indiqué précédemment.

Dans ce processus, l'opérateur O doit signaler que l'exécution complète d'un produit ou d'une commande est achevée, pour que le produit ou la commande soit retiré des commandes à réaliser. Pour ce faire, il prend l'étiquette du produit ou de la commande qui vient d'être exécuté, l'appose sur l'emballage du produit ou de la commande en question, et appuie sur un actionneur d'un dispositif de signalisation D (désigné dans le jargon de la restauration rapide par les termes anglais « bump bar ») qui transmet l'information à l'unité centrale UC, qui transmet à son tour, à l'écran d'affichage E, des instructions de mise à jour des commandes à réaliser, ceci au fur et à mesure des préhensions successives de tickets.

On comprend que l'opérateur soumis à un tel processus doit, dans la journée, exécuter de nombreux gestes, ceci à une cadence éventuellement soutenue.

L'invention a notamment pour objectif de pallier cet inconvénient de l'art antérieur.

Plus précisément, l'invention a pour objectif de réduire le nombre d'actions à réaliser par un opérateur exécutant un processus de suivi des productions et des commandes mettant en œuvre une imprimante à tickets telle que décrite précédemment.

L'invention a également pour objectif de reconcevoir les interfaces métier mises en œuvre dans de tel processus.

Ces objectifs, ainsi que d'autres qui apparaitront par la suite, sont atteints grâce à l'invention qui a pour objet un système d'assistance au suivi de commandes dans le domaine de la restauration tel que défini dans la revendication 1.

On note qu'on entend par « commande » un produit unitaire ou plusieurs produits formant ensemble une commande unitaire.

Comme indiqué précédemment, les imprimantes de tickets décrites précédemment présentent au moins un port externe par l'intermédiaire duquel l'imprimante peut émettre un signal électrique apte à déclencher une ouverture d'un tiroir-caisse connecté à l'imprimante ou, plus généralement pour déclencher une action sur un appareil externe connecté à l'imprimante.

Le principe de l'invention réside dans le fait de remplacer le signal de déclenchement d'une action sur l'appareil externe connecté à l'imprimante (qui peut être précisément le signal de commande d'ouverture du tiroir-caisse) inséré dans le flux d'impression par un signal destiné à être transmis, par l'intermédiaire du port de sortie de l'imprimante de tickets, à l'ensemble informatique qui exécute l'application métier, pour lui indiquer que la réalisation de la commande correspondant au ticket imprimé a été achevée. L'ensemble informatique peut alors transmettre des instructions de mise à jour à l'écran d'affichage.

Grâce à l'invention, il est possible pour l'opérateur de s'affranchir de l'actionnement manuel du dispositif de signalisation (« bump bar »). La simple préhension du ticket imprimé déclenche en effet l'émission automatique d'un signal à destination de l'ensemble informatique. En ce sens, le signal en question est désigné par « signal d'exécution automatique » dans la suite de la description.

Selon un mode de réalisation avantageux, l'ensemble informatique comprend une unité centrale et au moins un périphérique connecté au port de sortie de l'imprimante de tickets et connecté à l'unité centrale de telle sorte que les signaux d'exécution automatique soient transmis à l'unité centrale par l'intermédiaire du périphérique.

De cette façon, il est possible d'insérer dans le flux d'impression des signaux d'exécution automatique ayant un format éventuellement non reconnu par l'unité centrale. Le périphérique intercalé entre le port de sortie de l'imprimante de tickets et l'unité centrale sert alors d'unité d'analyse et de traitement des signaux pour les transcrire dans un format reconnu par l'unité centrale.

Ainsi, selon une solution préférentielle, le ou les signaux d'exécution automatique sont émis pendant une durée constituant une variable destinée à être traitée par le périphérique avant d'être transmise à l'unité centrale.

Avantageusement, l'ensemble informatique est paramétré pour insérer dans le flux d'impression, entre les instructions d'impression de deux tickets consécutifs, une séquence de signaux d'exécution automatique, la séquence formant un code destiné à être traité par l'unité centrale.

On peut de cette façon augmenter le nombre d'instructions possibles résultant des signaux d'exécution automatique, chaque instruction pouvant être attribuée à un code formé par la séquence de signaux d'exécution automatique.

Pour reprendre une fonction avantageuse de l'art antérieur, l'ensemble informatique est, de préférence, paramétré pour insérer dans le flux d'impression, entre les instructions d'impression de deux tickets consécutifs, une instruction de coupe traitée par l'imprimante de tickets pour exécuter une découpe entre deux tickets consécutifs.

Dans ce cas, selon une solution avantageuse, l'ensemble informatique est paramétré pour insérer dans le flux d'impression, entre les instructions d'impression de deux tickets consécutifs, de façon chronologique :
- une séquence de signaux d'exécution automatique, incluant une instruction d'enregistrement de la séquence dans une mémoire tampon de l'imprimante de tickets ;
- après émission du signal de détection de la préhension d'un ticket, une instruction de libération de la séquence à partir de la mémoire tampon à destination du port de sortie de l'imprimante de tickets.

L'insertion d'un code dans le flux d'impression à traiter après le signal de détection de la préhension d'un ticket, tend à introduire automatiquement un délai avant la reprise de l'impression du ticket suivant. Or, une telle latence peut être préjudiciable à la bonne réactivité de l'application métier exécutée par le système selon l'invention.

En insérant chronologiquement la séquence de signaux d'exécution automatique dans le flux d'impression tel que décrit précédemment, on évite ce temps de latence. En effet, l'enregistrement de la séquence dans une mémoire tampon de l'imprimante de tickets permet de poursuivre le déroulement du flux d'impression et de ne libérer la séquence enregistrée qu'après émission du signal de détection de la préhension du ticket, immédiatement après, sans temps de latence.

Selon un mode de réalisation particulier, le système comprend un dispositif de signalisation présentant au moins un actionneur destiné à recevoir un actionnement manuel par un opérateur après une exécution d'une commande à réaliser pour lequel un ticket a été imprimé par l'imprimante de tickets, le dispositif de signalisation étant connecté à l'unité centrale pour lui transmettre un signal d'exécution « opérateur » à chaque actionnement manuel.

Dans ce cas, l'ensemble informatique est paramétré pour transmettre à l'écran d'affichage une instruction de mise à jour des commandes à réaliser au premier du signal d'exécution automatique ou du signal d'exécution « opérateur » reçu.

Ainsi, un opérateur peut conserver ses habitudes opérationnelles, s'agissant d'utiliser un actionneur pour indiquer l'exécution achevée d'une commande, sans se soucier de savoir si l'unité centrale traite le signal d'exécution « opérateur » ou le signal d'exécution automatique.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 illustre schématiquement un système d'assistance au suivi de commandes de produit dans le domaine de la restauration, selon l'art antérieur ;
- la figure 2 illustre schématiquement un système de suivi de commandes de produit dans le domaine de la restauration, selon l'invention ;
- la figure 3 illustre schématiquement un port de sortie d'une imprimante de tickets d'un système d'assistance au suivi de commande dans le domaine de la restauration, selon l'invention ;
- la figure 4 illustre un diagramme illustrant un extrait d'un flux d'impression dans un système selon l'invention.

En référence à la figure 2, on décrit un système d'assistance au suivi de commandes (constituée par un produit unique ou par un ensemble de plusieurs produits) dans le domaine de la restauration selon l'invention.

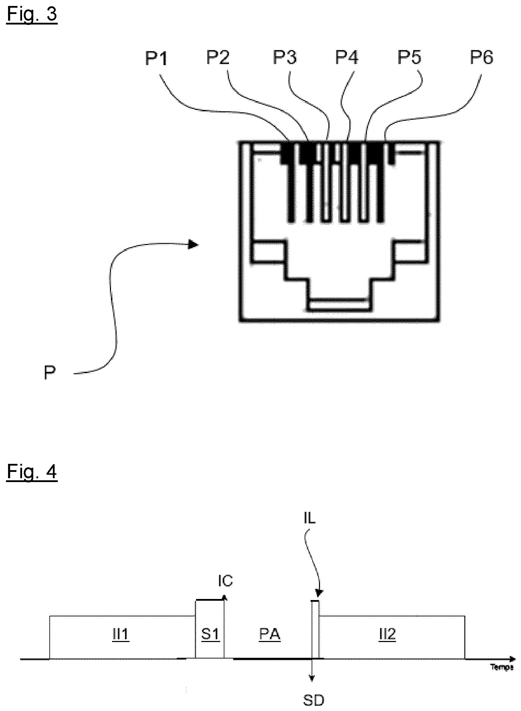

Un tel système met en œuvre, de façon connue en soi :
- un écran d'affichage E des commandes à réaliser,
- une imprimante de tickets I, paramétrée pour stocker des instructions d'impression, imprimer un ticket et détecter la préhension du ticket avant d'imprimer un nouveau ticket, cette imprimante présentant un port de sortie P décrit plus en détails par la suite, en référence à la figure 3,
- un ensemble informatique El paramétré pour:
   - recevoir et enregistrer des données de commande;
   - transmettre à l'écran d'affichage E des données à afficher relatives aux commandes;
   - transmettre à l'imprimante de tickets I un flux d'instruction d'impressions séquencées, dit flux « d'impression », pour qu'un qu'un ticket soit imprimé pour chaque commande à réaliser ;
   - recevoir de la part de l'imprimante de tickets I un signal de détection de la préhension d'un ticket ;
   - transmettre à l'écran d'affichage E des instructions de mise à jour des commandes à réaliser au fur et à mesure des préhensions successives de tickets.

Selon le principe de l'invention, l'ensemble informatique El est connecté au port de sortie P de l'imprimante de tickets I.

De plus, l'ensemble informatique El est paramétré pour :
- insérer dans le flux d'impression, entre les instructions d'impression de deux tickets consécutifs, au moins un signal d'exécution automatique destiné à être transmis aux port de sortie de l'imprimante de tickets ;
- traiter chaque signal d'exécution automatique reçu du port de sortie P de l'imprimante de tickets I pour transmettre à l'écran d'affichage E une instruction de mise à jour des commandes à réaliser.

En d'autres termes, l'imprimante de tickets I reçoit des instructions d'impression d'un ticket correspondant à une commande à réaliser, ce ticket étant conservé sur l'imprimante en attente de préhension. Une fois la commande réalisée, l'opérateur se saisit du ticket et l'extrait (le sépare) de l'imprimante. Les tickets sont de type adhésifs et les imprimantes qui impriment ces tickets adhésifs sont généralement paramétrées pour exécuter une fonction automatique d'arrêt après chaque impression de ticket accompagnée d'une découpe en aval du ticket. Toutefois, on que l'invention s'applique également avec des imprimantes de tickets non adhésifs.

L'imprimante stocke la suite des impressions dans sa mémoire jusqu'au déblocage du flux d'impression par la préhension du ticket mis en attente. Cette préhension est détectée par un capteur de détection de la traction du ticket, ce capteur étant couplé à un rouleau sur lequel le ticket adhésif est mis en attente.

Ainsi, lorsqu'un opérateur E se saisit d'un ticket, la préhension du ticket est donc détectée par l'imprimante qui émet un signal de détection de la préhension du ticket.

L'ensemble informatique a en amont été paramétré pour insérer dans le flux d'impression, entre les instructions d'impression de deux tickets consécutifs et après l'émission du signal de détection de la préhension d'un ticket, un signal d'exécution automatique émis par l'imprimante de ticket I, par l'intermédiaire de son port de sortie P. Ce signal est alors traité par l'ensemble informatique pour le traduire en instruction(s) de mise à jour des commandes transmises à l'écran d'affichage E.

Selon le mode de réalisation illustré par la figure 2, l'ensemble informatique El comprend :
- une unité centrale UC ;
- un périphérique PE, connecté au port de sortie P de l'imprimante de ticket I.

Le périphérique PE est, d'une part, connecté à l'unité centrale UC et, d'autre part, au port de sortie P de l'imprimante de ticket I, de telle sorte que les signaux d'exécution automatique soient transmis au périphérique PE par l'intermédiaire duquel ils sont analysés puis traités (et en particulier traduits dans un code reconnu par l'unité centrale), puis transmis à l'unité centrale.

Selon ce mode de réalisation, le ou les signaux d'exécution automatique sont émis pendant une durée constituant une variable destinée à être traitée par le périphérique PE avant d'être transmis à l'unité centrale UC.

Comme indiqué précédemment, le port de sortie des imprimantes de tickets existantes est apte à émettre un signal électrique destiné à déclencher une action sur l'appareil auxiliaire à connecter à l'imprimante. Le plus souvent, l'appareil auxiliaire en question est un tiroir-caisse. Dans ce contexte, les instructions contenues dans le flux d'impression permettent la génération d'une impulsion sur le port dédié à la commande du tiroir-caisse. Cette fonction étant conçue pour le pilotage d'une interface mécanique (le tiroir-caisse), elle permet le passage généralement de deux paramètres d'une valeur allant de 0 à 255 qui représentent le temps d'ouverture et le temps de fermeture, ceci par pas de 2 ms.

Pour des raisons de compatibilité, une grande majorité des imprimantes de tickets utilisent le brochage illustré à titre d'exemple par la figure 4 concernant le port P, sous forme d'un connecteur pour l'ouverture des tiroirs-caisses. Le brochage est généralement le suivant :
- Pin 1 P1 : plan de masse ;
- Pin 2 P2 : signal de sortie du tiroir-caisse n°1 ;
- Pin 3 P3 : signal d'entrée sur l'état entré/sorti du tiroir ;
- Pin 4 P4 : + 24 V ;
- Pin 5 P5 : signal de sortie du tiroir-caisse n°2 ;
- Pin 6 P6 : masse de signal.

Sur de tels ports P, les Pin 2 P2 et Pin 5 P5 permettent de contrôler respectivement un premier tiroir-caisse et un deuxième tiroir-caisse. Ils fonctionnent en mode « collecteur ouvert », ce qui signifie qu'ils deviennent passant lorsque l'on commande l'ouverture de l'un ou l'autre des tiroirs. En plaçant le périphérique PE raccordé à l'imprimante de tickets I via le port de sortie P, il est donc possible de détecter et d'analyser la largeur des impulsions sur les canaux disponibles (Pin 2 et Pin 5).

Dans le cadre de l'invention, cette impulsion est désignée par les termes « signal d'exécution automatique ».

L'analyse de la durée du signal d'exécution automatique (impulsion sur le Pin 2 P2 et/ou sur le Pin 5 P5) permet de retranscrire le paramètre numérique définissant le nombre de pas de 2 ms utilisé lors de la commande insérée par l'application métier dans le flux d'impression sur l'un et/ou l'autre des deux canaux Pin 2 et Pin 5.

La durée de ces signaux constitue donc bien une variable destinée à être traitée par le périphérique PE avant d'être transmise à l'unité centrale UC.

L'enchaînement des impulsions peut alors constituer un ou plusieurs codes correspondant chacun à une instruction dédiée.

Ainsi, selon une solution avantageuse, l'ensemble informatique El est paramétré pour insérer dans le flux d'impression, entre les instructions d'impression de deux tickets consécutifs, une séquence de signaux d'exécution automatique, cette séquence formant un code destiné à être traité par l'unité centrale.

En référence à la figure 4, l'ensemble informatique El est paramétré pour insérer dans le flux d'impression, entre les instructions d'impression II1 et II2 de deux tickets consécutifs, une instruction de coupe IC traitée par l'imprimante de tickets pour exécuter une découpe mécanique entre deux tickets consécutifs. On note que cette instruction peut être optionnelle si la bande de tickets adhésifs est prédécoupée.

Tel qu'illustré par la figure 4, l'ensemble informatique est avantageusement paramétré pour insérer dans le flux de l'impression, entre les instructions d'impression II1 et II2 de deux tickets consécutifs, une séquence d'instructions chronologique, à savoir :
- une séquence S1 de signaux d'exécution automatique, précédant l'instruction de coupe IC, incluant en préambule une instruction d'enregistrement de la séquence S1 dans une mémoire tampon de l'imprimante de tickets;
- une période d'attente PA de la préhension du ticket imprimé et,
- après émission du signal de détection SD de la préhension d'un ticket, une instruction de libération IL de la séquence de signaux d'exécution automatique à partir de la mémoire tampon de l'imprimante de tickets, à destination du port de sortie P de l'imprimante de tickets.

A la fin de cet enchaînement, l'imprimante de tickets imprime immédiatement un nouveau ticket sur la base des instructions d'impression II2.

Selon un mode de réalisation particulier, le système comprend en outre un dispositif de signalisation D présentant au moins un actionneur D1 destiné à être actionné manuellement par un opérateur O, ceci pour indiquer que la commande correspondant au ticket imprimé a été exécutée et peut donc être retirée de la liste des commandes. Ce dispositif de signalisation D est connecté à l'unité centrale UC pour lui transmettre un signal d'exécution « opérateur » à chaque actionnement manuel de l'actionneur D1.

Dans ce cas, l'ensemble informatique El est paramétré pour transmettre à l'écran d'affichage une instruction de mise à jour des commandes à réaliser au premier signal reçu entre le signal d'exécution automatique et le signal d'exécution « opérateur ».

## Revendications

1. Système d'assistance au suivi de commandes dans le domaine de la restauration, mettant en œuvre :
- un écran d'affichage (E) des commandes à réaliser,
- une imprimante de tickets (I), paramétrée pour stocker des instructions d'impression (II1, II2), imprimer un ticket et détecter la préhension dudit ticket avant d'imprimer un nouveau ticket, ladite imprimante de tickets présentant un port de sortie (P2, P5) apte à émettre un signal électrique destiné à déclencher une action sur un appareil auxiliaire connecté à l'imprimante,
- un ensemble informatique (UG, PE) paramétré pour :
- recevoir et enregistrer des données de commandes;
- transmettre à l'écran d'affichage des données à afficher relatives aux commandes;
- transmettre à l'imprimante de tickets un flux d'instructions d'impression séquencées, dit flux d'impression, pour qu'un ticket soit imprimé pour chaque commande à réaliser,
- recevoir, de la part de l'imprimante de tickets, un signal (IL) de détection de la préhension d'un ticket,
- transmettre à l'écran d'affichage des instructions de mise à jour des commandes à réaliser au fur et à mesure des préhensions successives de tickets, ensemble informatique étant connecté au port de sortie de l'imprimante de tickets et est en outre paramétré pour :
- insérer dans le flux d'impression, entre les instructions d'impression de deux tickets consécutifs, au moins un signal (S1) d'exécution automatique destiné à être transmis au port de sortie de l'imprimante de tickets ;
- traiter chaque signal d'exécution automatique reçu du port de sortie de l'imprimante de tickets pour transmettre à l'écran d'affichage une instruction de mise à jour des commandes à réaliser.

2. Système d'assistance au suivi de commandes de produits dans le domaine de la restauration selon la revendication 1, **caractérisé en ce que** l'ensemble informatique comprend une unité centrale et au moins un périphérique connecté au port de sortie de l'imprimante de tickets et connecté à l'unité centrale de telle sorte que les signaux d'exécution automatique soit transmis à l'unité centrale par l'intermédiaire du périphérique.

3. Système d'assistance au suivi de commandes de produits dans le domaine de la restauration selon la revendication précédente, **caractérisé en ce que** le ou les signaux d'exécution automatique sont émis pendant une durée constituant une variable destinée à être traitée par le périphérique avant d'être transmise à l'unité centrale.

4. Système d'assistance au suivi de commandes de produits dans le domaine de la restauration selon l'une des revendications précédentes, **caractérisé en ce que** l'ensemble informatique est paramétré pour insérer dans le flux d'impression, entre les instructions d'impression de deux tickets consécutifs, une séquence de signaux d'exécution automatique, la séquence formant un code destiné à être traité par l'unité centrale.

5. Système d'assistance au suivi de commandes de produits dans le domaine de la restauration selon l'une des revendications précédentes, **caractérisé en ce que** l'ensemble informatique est paramétré pour insérer dans le flux d'impression, entre les instructions d'impression de deux tickets consécutifs, une instruction de coupe traitée par l'imprimante de tickets pour exécuter une découpe entre deux tickets consécutifs.

6. Système d'assistance au suivi de commandes de produits dans le domaine de la restauration selon la revendication précédente, **caractérisé en ce que** l'ensemble informatique est paramétré pour insérer dans le flux d'impression, entre les instructions d'impression de deux tickets consécutifs, de façon chronologique :
- une séquence de signaux d'exécution automatique, incluant une instruction d'enregistrement de la séquence dans une mémoire tampon de l'imprimante de tickets ;
- après émission du signal de détection de la préhension d'un ticket, une instruction de libération de la séquence à partir de la mémoire tampon à destination du port de sortie de l'imprimante de tickets.

7. Système d'assistance au suivi de commandes de produits dans le domaine de la restauration selon l'une des revendications précédentes, **caractérisé en ce qu'**il comprend un dispositif de signalisation présentant au moins un actionneur destiné à recevoir un actionnement manuel par un opérateur après une exécution d'une commande à réaliser pour lequel un ticket a été imprimé par l'imprimante de tickets, le dispositif de signalisation étant connecté à l'unité centrale pour lui transmettre un signal d'exécution « opérateur » à chaque actionnement manuel.

8. Système d'assistance au suivi de commandes de produits dans le domaine de la restauration selon la revendication précédente, caractérisé l'ensemble informatique est paramétré pour transmettre à l'écran d'affichage une instruction de mise à jour des commandes à réaliser au premier du signal d'exécution automatique ou du signal d'exécution « opérateur » reçu.

## Patentansprüche

1. Assistenzsystem zur Verfolgung von Bestellungen im Bereich der Gastronomie, das umsetzt:
- einen Anzeigebildschirm (E) der auszuführenden Bestellungen,
- einen Ticketdrucker (I), der parametriert ist, um Druckanweisungen (II1, II2) zu speichern, ein Ticket zu drucken und das Entnehmen des Tickets zu erkennen, bevor ein neues Ticket gedruckt wird, wobei der Ticketdrucker einen Ausgangsanschluss (P2, P5) aufweist, der in der Lage ist, ein elektrisches Signal auszugeben, das dazu bestimmt ist, eine Aktion an einem mit dem Drucker verbundenen Hilfsgerät auszulösen,
- eine Datenverarbeitungsanlage (UC, PE), die parametriert ist, zum:
- Empfangen und Speichern von Bestelldaten;
- Übermitteln anzuzeigender Daten in Bezug zu den Bestellungen an den Anzeigebildschirm;
- Übermitteln eines Flusses sequenzierter Druckanweisungen, Druckfluss genannt, an den Ticketdrucker, damit für jede auszuführende Bestellung ein Ticket gedruckt wird,
- Empfangen eines Signals (IL) zum Erkennen der Entnahme eines Tickets von dem Ticketdrucker,
- Übermitteln von Anweisungen zur Aktualisierung der Bestellungen an den Anzeigebildschirm, die je nach Entnahmen von Tickets auszuführen sind, wobei die Datenverarbeitungsanlage mit dem Ausgangsanschluss des Ticketdruckers verbunden ist und weiter parametriert ist, zum:
- zwischen den Druckanweisungen zweier aufeinanderfolgender Tickets, Einfügen mindestens eines automatischen Ausführungssignals (S1) in den Druckfluss, das dazu bestimmt ist, dem Ausgangsanschluss des Ticketdruckers übermittelt zu werden;
- Verarbeiten jedes von dem Ausgabeport des Ticketdruckers empfangenen automatischen Ausführungssignals, um dem Anzeigebildschirm eine Anweisung zur Aktualisierung der auszuführenden Bestellungen zu übermitteln.

2. Assistenzsystem zur Verfolgung von Produktbestellungen im Bereich der Gastronomie nach Anspruch 1, **dadurch gekennzeichnet, dass** die Datenverarbeitungsanlage eine Zentraleinheit und mindestens ein Peripheriegerät umfasst, das mit dem Ausgangsanschluss des Ticketdruckers verbunden ist und mit der Zentraleinheit verbunden ist, sodass die automatischen Ausführungssignale über das Peripheriegerät an die Zentraleinheit übermittelt werden.

3. Assistenzsystem zur Verfolgung von Produktbestellungen im Bereich der Gastronomie nach dem vorstehenden Anspruch, **dadurch gekennzeichnet, dass** das oder die automatischen Ausführungssignale für eine Dauer gesendet werden, die eine Variable darstellt, die dazu bestimmt ist, von dem Peripheriegerät verarbeitet zu werden, bevor sie an die Zentraleinheit übermittelt wird.

4. Assistenzsystem zur Verfolgung von Produktbestellungen im Bereich der Gastronomie nach einem der vorstehenden Ansprüche, **dadurch gekennzeichnet, dass** die Datenverarbeitungsanlage parametriert ist, um zwischen den Druckanweisungen zweier aufeinanderfolgender Tickets eine Sequenz von automatischen Ausführungssignalen einzufügen, wobei die Sequenz einen Code bildet, der dazu bestimmt ist, von der Zentraleinheit verarbeitet zu werden.

5. Assistenzsystem zur Verfolgung von Produktbestellungen im Bereich der Gastronomie nach einem der vorstehenden Ansprüche, **dadurch gekennzeichnet, dass** die Datenverarbeitungsanlage parametriert ist, um zwischen den Druckanweisungen zweier aufeinanderfolgender Tickets eine von dem Ticketdrucker verarbeitete Schnittanweisung einzufügen, um einen Schnitt zwischen zwei aufeinanderfolgenden Tickets auszuführen.

6. Assistenzsystem zur Verfolgung von Produktbestellungen im Bereich der Gastronomie nach dem vorstehenden Anspruch, **dadurch gekennzeichnet, dass** die Datenverarbeitungsanlage parametriert ist, um zwischen den Druckanweisungen zweier aufeinanderfolgender Tickets chronologisch in den Druckablauf einzufügen:
- eine Sequenz von automatischen Ausführungssignalen, die eine Anweisung zum Speichern der Sequenz in einem Pufferspeicher des Ticketdruckers enthalten;
- nach Senden des Erkennungssignals der Entnahme eines Tickets eine Anweisung zur Freigabe der Sequenz aus dem Pufferspeicher an den Ausgangsanschluss des Ticketdruckers.

7. Assistenzsystem zur Verfolgung von Produktbestellungen im Bereich der Gastronomie nach einem der vorstehenden Ansprüche, **dadurch gekennzeichnet, dass** es eine Signalisierungsvorrichtung umfasst, die mindestens eine Betätigungsvorrichtung aufweist, die dazu bestimmt ist, eine manuelle Betätigung durch einen Bediener nach Ausführung einer auszuführenden Bestellung zu empfangen, für die ein Ticket von dem Ticketdrucker gedruckt worden ist, wobei die Signalisierungsvorrichtung mit der Zentraleinheit verbunden ist, um dieser bei jeder manuellen Betätigung ein Ausführungssignal "Bediener" zu übermitteln.

8. Assistenzsystem zur Verfolgung von Produktbestellungen im Bereich der Gastronomie nach dem vorstehenden Anspruch, **dadurch gekennzeichnet, dass** die Datenverarbeitungsanlage parametriert ist, um dem Anzeigebildschirm bei dem ersten automatischen Ausführungssignal oder bei dem Ausführungssignal "Bediener" eine Anweisung zum Aktualisieren der auszuführenden Bestellungen zu übermitteln.

## Claims

1. System for assisting with order tracking in the restaurant industry, implementing:
- a display screen (E) for displaying the orders to be prepared,
- a ticket printer (I), configured to store printing instructions (II1, II2), print a ticket and detect the removal of said ticket before printing a new ticket, said ticket printer having an output port (P2, P5) capable of generating an electrical signal intended to trigger an action on an auxiliary device connected to the printer,
- a computer assembly (UC, PE) configured to:
- receive and store order data;
- transmit data relating to the orders to the display screen for display;
- transmit a stream of sequential printing instructions to the ticket printer, hereinafter referred to as the printing stream, so that a ticket is printed for each order to be prepared,
- receive, from the ticket printer, a signal (IL) of detection of the removal of a ticket,
- transmit instructions for updating the orders to be prepared to the display screen as tickets are successively removed, the computer assembly being connected to the output port of the ticket printer and is also configured to:
- insert in the printing stream, between the printing instructions of two consecutive tickets, at least one automatic execution signal (S1) intended to be transmitted to the output port of the ticket printer;
- process each automatic execution signal received from the output port of the ticket printer in order to transmit an instruction for updating the orders to be prepared to the display screen.

2. System for assisting with product order tracking in the restaurant industry according to Claim 1, **characterised in that** the computer assembly comprises a central unit and at least one peripheral device connected to the output port of the ticket printer and connected to the central unit such that the automatic execution signals are transmitted to the central unit via the peripheral device.

3. System for assisting with product order tracking in the restaurant industry according to the preceding claim, **characterised in that** the automatic execution signal(s) are generated for a period constituting a variable intended to be processed by the peripheral device before being transmitted to the central unit.

4. System for assisting with product order tracking in the restaurant industry according to one of the preceding claims, **characterised in that** the computer assembly is configured to insert in the printing stream, between the printing instructions of two consecutive tickets, a sequence of automatic execution signals, the sequence forming a code intended to be processed by the central unit.

5. System for assisting with product order tracking in the restaurant industry according to one of the preceding claims, **characterised in that** the computer assembly is configured to insert in the printing stream, between the printing instructions of two consecutive tickets, a cutting instruction processed by the ticket printer to perform a cut between two consecutive tickets.

6. System for assisting with product order tracking in the restaurant industry according to the preceding claim, **characterised in that** the computer assembly is configured to insert in the printing stream, between the printing instructions of two consecutive tickets, in a chronological manner:
- a sequence of automatic execution signals, including an instruction to store the sequence in a buffer memory of the ticket printer;
- after issuing the ticket removal detection signal, an instruction to clear the sequence from the buffer memory to the output port of the ticket printer.

7. System for assisting with product order tracking in the restaurant industry according to one of the preceding claims, **characterised in that** it comprises a signalling device having at least one actuator intended to receive a manual actuation by an operator after completion of an order to be prepared for which a ticket has been printed by the ticket printer, the signalling device being connected to the central unit so as to transmit an "operator" execution signal thereto upon each manual actuation.

8. System for assisting with product order tracking in the restaurant industry according to the preceding claim, **characterised in that** the computer assembly is configured to transmit an instruction for updating the orders to be prepared at first to the display screen upon receipt of the automatic execution signal or the "operator" execution signal.
